# EUROPÄISCHE PATENTSCHRIFT

(11) **EP 1 563 670 B1**
(45) Veröffentlichungstag und Bekanntmachung des Hinweises auf die Patenterteilung: **08.11.2006**
(21) Anmeldenummer: 03753276.9
(22) Anmeldetag: 08.09.2003
(51) Int. Cl.: H04L 29/08, G06F 15/163

(54) **VERFAHREN ZUM ERMÖGLICHEN EINES AUSTAUSCHES VON DATEN ZWISCHEN EINEM XLET-BASIERTEN UND EINEM BUNDLE-BASIERTEN DATENSATZ ÜBER EINE BUNDLE-BASIERTE SCHNITTSTELLE**
METHOD FOR PERMITTING AN EXCHANGE OF DATA BETWEEN AN XLET-BASED AND A BUNDLE-BASED DATA SET VIA A BUNDLE-BASED INTERFACE
PROCEDE POUR PERMETTRE UN ECHANGE DE DONNEES ENTRE UN JEU DE DONNEES A BASE DES XLETS ET D'UN JEU DE DONNEES A BASE DE FAISCEAUX PAR L'INTERMEDIAIRE D'UNE INTERFACE A BASE DE FAISCEAUX

(30) Priorität: 13.11.2002 DE 10253115
(43) Veröffentlichungstag der Anmeldung: 17.08.2005
(73) Patentinhaber: ROBERT BOSCH GMBH, 70442 Stuttgart (DE)
(72) Erfinder: MANN PELZ, Rodolfo, 30175 Hannover (DE); MAY, Thomas, 38302 Wolfenbuettel (DE)
(86) Internationale Anmeldenummer: PCT/DE2003/002970
(87) Internationale Veröffentlichungsnummer: WO 2004/045191

(56) Entgegenhaltungen:
- WO-A-02/073965
- ANONYMOUS: "How Multiple Services Work on an OSGI Service Platform" OPEN SERVICES GATEWAY INITIATIVE, [Online] 2002, Seiten 1-39, XP002267736 Gefunden im Internet: <URL:http://www.osgi.org/resources/HomeNRG /Barr_OSGi_MultipleServices.pdf> [gefunden am 2004-01-22]

## Beschreibung

### STAND DER TECHNIK

Die vorliegende Erfindung betrifft ein Verfahren zum Ermöglichen eines Austausches von Daten zwischen einem Xlet-basierten Datensatz und einem Bundle-basierten Datensatz über eine Bundle-basierte Schnittstelle.

Um den Datenaustausch innerhalb komplexer Systeme bereitzustellen, besteht die Notwendigkeit, Schnittstellen zum Austauschen der Daten vorzusehen. Auf dem Gebiet digitaler Rundfunksysteme wie z.B. DAB (Digital Audio Broadcast) oder DVB (Digital Video Broadcast) ist neben dem Versenden der digitalen Audio-, Video- und/oder Textdaten, welche passive Daten sind, ebenfalls das Übertragen von aktiven Daten bzw. Ressourcen wie beispielsweise Java-Software, Inhalten, usw. in einem Datenstrom zur Bereitstellung z.B. von Java-Applikationen wünschenswert. Um einen Datenaustausch zwischen empfangenen Datensätzen und den systemimmanenten Datensätzen zu gewährleisten, ist es erforderlich; dass eine gleichartige Schnittstelle zum Vorsehen einer Interaktion mit einem Datenaustausch von und zu beiden Datensätzen definiert und implementiert wird.

Solche aktiven Datensätze zur Bereitstellung von Java-Applikationen, welche beispielsweise bei DAB mit dem Rundfunkaudioprogramm, d.h. passiven Daten, übertragen werden, bezeichnet man gemäß DAB-Java-Spezifikation als Xlets. Bereitgestellt werden diese Xlets mittels eines spezifizierten Java-basierten Applikationsrahmens (DAB Java Runtime Package). Xlets stellen dem Anwender interaktive Funktionen zur Verfügung wie z.B. eine elektronische Programmübersicht, Zusatzinformation zum Programm oder den Zugriff auf sonstige Informationen. Xlet-Datensätze haben gemäß der DAB-Java-Spezifikation die Möglichkeit, einen Container für eine eigene Nutzerschnittstelle, welche die Xlets dem Anwender bereitstellen, aufzurufen bzw. anzufordern und auf Funktionen des DAB-Empfängers zuzugreifen, um z.B. Daten zu empfangen.

Das Industriekonsortium OSGI (Open Services Gateway Initiative) gegründet im März 1999 spezifiziert einen Java-basierten Applikationsrahmen zum Bereitstellen vielfältiger Dienste sowohl über großflächige als auch lokale Netzwerke und Einrichtungen, wobei auf eine vollständige end to end Architektur von gegebenenfalls entfernten Dienstanbietern für lokale Einrichtungen wert gelegt. Durch OSGI wird somit eine Art Betriebssystem spezifiziert und bereitgestellt, in welchem Java-Applikationen als Bundles bezeichnet werden.

Im Wesentlichen entspricht die Struktur eines Bundles gemäß OSGI-Spezifikation der Struktur eines Xlets in einem DAB-System.

Nahegelegt ist die Integration eines Rundfunkempfängers als Applikation in einem OSGI-basierten System. Wobei Xlets dargestellt und verarbeitet werden können. Die Verwaltung der DAB-basierten Java-Applikationen "Xlets" und der OSGI-basierten Java-Applikationen "Bundles" erfolgen dabei jedoch voneinander getrennt, d.h. Bundles bzw. Bundle-Datensätze können nicht auf Xlets bzw. Xlet- Datensätze zugreifen und Xlets können nicht mit Bundles interagieren, d.h. ein Datenaustausch zwischen Bundles und Xlets kann nicht erfolgen.

### VORTEILE DER ERFINDUNG

Das erfindungsgemäße Verfahren zum Ermöglichen eines Austausches von Daten zwischen einem Xlet-basierten Datensatz und einem Bundle-basierten Datensatz über eine Bundle-basierte Schnittstelle mit den Merkmalen des Anspruchs 1 weist gegenüber dem nahegelegten Lösungsansatz den Vorteil auf, das ein Datenaustausch zwischen einem Xlet-basierten Datensatz und einem Bundle-basierten Datensatz ermöglicht und somit eine Interaktion beider Datensätze miteinander möglich gemacht wird.

Dadurch wird bereitgestellt, dass Xlet-basierte Datensätze in einem OSGI-kompatiblen System ausgeführt werden und mit OSGI-Bundles d.h. Bundle-basierten Datensätzen interagieren können.

Die der vorliegenden Erfindung zugrundeliegende Idee besteht im Wesentlichen darin, dass ein Xlet-basierter Datensatz, welcher über eine vorbestimmte Schnittstelle einen Datenaustausch vornehmen kann, derart erweitert wird, dass über die vorzugsweise vorhandene Xlet-basierte Schnittstelle "XletContext" eine Abfrage an die Datenverarbeitungseinrichtung erfolgen kann, ob die Datenverarbeitungseinrichtung über eine Bundle-basierte Schnittstelle "BundleContext" verfügt, und wenn ja im Xlet-basierten Datensatz eine Referenz auf eine Bundle-basierte Schnittstelle "BundleContext" gespeichert wird, um eine Schnittstelle für die Kommunikation mit Bundle-basierten Datensätzen anzufordern und/oder Bereitzustellen.

In der vorliegenden Erfindung wird das eingangs erwähnte Problem insbesondere dadurch gelöst, mindestens einen Xlet-basierten Datensatz in einer Datenverarbeitungseinrichtung mit einer Speichereinrichtung vorzusehen, wobei der Xlet-basierte Datensatz über eine Xlet-basierte Schnittstelle Daten austauschen kann, und ein Bundle-basierter Datensatz in der Datenverarbeitungseinrichtung vorgesehen wird, wobei der Bundle-basierte Datensatz über eine Bundle-basierte Schnittstelle Daten austauschen kann und in der Datenverarbeitungseinrichtung der Xlet-basierte Datensatz über die Xlet-basierte Schnittstelle feststellt, daß die Datenverarbeitungseinrichtung die Bundle-basierte Schnittstelle aufweist, und falls ja, dass eine Referenz auf eine Bundle-basierte Schnittstelle im Xlet-basierten Datensatz gespeichert wird, um einen Zugriff auf Bundle-basierte Datensätze und somit einen Datenaustausch in der Datenverarbeitungseinrichtung zu ermöglichen.

Die Xlet-basierten Datensätze werden im nachfolgenden auch als OSGI-Xlets bezeichnet. Aufgrund ihrer Xlet-Basis sind solche OSGI-Xlets kompatibel mit der DAB-Java-Spezifikation, sodass sie auch auf einem System ohne OSGI beispielsweise einem DAB-Empfänger lauffähig sind. Die Interaktion, d.h. der Datenaustausch zwischen einem OSGI-Xlet, d.h. einem ergänzten Xlet-basierten Datensatz, mit Bundles gemäß OSGI-Spezifikation hat z.B. in einem Fahrerinformationssystem die Vorteile, dass OSGI-Xlets die standardisierten Systemdienste des OSGI-Systems nutzen können wie beispielsweise Datenspeicherung, Anwenderverwaltung, Logging, Zugriff auf Ortsinformationen, d.h. die Fahrzeugposition, und Nutzung von Netzwerkverbindungen. Vor allem der Zugriff auf Ortsinformationen gestaltet sich vorteilhaft, um beispielsweise gezielte Stauwarnungen in dem Fahrerinformationssystem anzeigen zu können.

Darüber hinaus ist von Vorteil, dass OSGI-Xlets zusätzlich auch auf vorhandene Java-Applikationen im OSGI-System, d.h. Bundles, zugreifen können, wie beispielsweise einem Navigationssystem ein Ziel übergeben oder fahrzeugspezifische Bedienmöglichkeiten wie etwa eine Spracheingabe nutzen. Außerdem können auch Bundles, d.h. andere Datensätze auf die Xlet-basierten Datensätze OSGI-Xlets zugreifen, um z.B. Verkehrsnachrichten, welche in Datenform im OSGI-Xlets vorliegen zu erhalten und verarbeiten zu können. Obwohl hier auf ein Fahreinformationssystem Bezug genommen wird, sind die Applikationen darüber hinaus auch beispielsweise in einem integrierten Home-Multimedia-System oder bei der Gebäudesteuerung bzw. -überwachung einsetzbar.

In den Unteransprüchen finden sich vorteilhafte Weiterbildungen und Verbesserungen des in Anspruch 1 angegebenen Verfahrens.

Gemäß einer bevorzugten Weiterbildung übergibt der Bundle-basierte Datensatz der XletContext Schnittstelle des Xlet-basierten Datensatzes eine Referenz auf die BundleContext Schnittstelle, und der Xlet-basierte Datensatz greift auf die Referenz auf die BundleContext Schnittstelle zu, um über diese BundleContext Schnittstelle einen Datenaustausch vorzusehen. So kann eine vorteilhafte Anpassung des Xlet-basierten Datensatzes, d.h. der Zugriff auf die BundleContext Schnittstelle implementiert werden, um einen Datenaustausch zwischen dem Xlet-basierten Datensatz und dem Bundle-basierten Datensatz über diese BundleContext Schnittstelle zu ermöglichen.

Gemäß einer weiteren bevorzugten Weiterbildung weist der Xlet-basierte Datensatz einen ersten Unterdatensatz zum Definieren der Eigenschaften und des Inhalts des Xlet-basierten Datensatzes und einen zweiten Unterdatensatz mit Datenpaketen auf, wobei der erste Unterdatensatz mindestens einen Dateneintrag eines Datenimport-Typs aufweist, in welchem definiert wird, welche Java-Pakete für die Bereitstellung des Datenaustausches erforderlich sind. Auf diese Weise wird die Ergänzung des Xlet-basierten Datensatzes vorteilhaft in einem Unterdatensatz vorzugsweise einer Manifestdatei eingebunden.

Gemäß einer weiteren bevorzugten Weiterbildung wird mindestens ein Dateneintrag, in welchem definiert wird, welche Datenpakete für die Bereitstellung des Datenaustauschs erforderlich sind, über einen MOT-Datensatz bzw. -Rahmen bereitgestellt, wobei der Xlet-basierte Datensatz einen Teil des MOT-Datensatzes bildet. Dies birgt den Vorteil, dass der zum Datenaustausch notwendige Dateneintrag vom Datenimport-Typ in einem im DAB-System spezifizierten MOT- Datenrahmen (Multimedia Object Transfer protocol) übertragen wird und somit außerhalb des Xlet-basierten Datensatzes die für einen Datenaustausch mit einem Bundle benötigte Information übermittelt wird.

Gemäß einer weiteren bevorzugten Weiterbildung wird der Xlet-basierte Datensatz in einem Datenstrom mit mindestens dem Xlet-basierten Datensatz über eine Rundfunkempfangseinrichtung empfangen und demoduliert. Derart kann der Xlet-basierte Datensatz auf vorteilhafte Weise einer nichtortsfesten Einrichtung wie z.B. einem Kraftfahrzeug übermittelt werden.

Gemäß einer weiteren bevorzugten Weiterbildung wird der Xlet-basierte Datensatz über eine DAB-Empfangseinrichtung empfangen und demoduliert.

Gemäß einer weiteren bevorzugten Weiterbildung wird der Xlet-basierte Datensatz als Teil eines MOT-Datensatzes übertragen, wobei der MOT-Datensatz einen Eintrag aufweist, welcher auf eine OSGI-Kompatibilität hinweist.

Gemäß einer weiteren bevorzugten Weiterbildung wird der Xlet-basierte Datensatz einer Datenverarbeitungseinrichtung eines Fahrerinformationssystems in einem Kraftfahrzeug zugeführt und dort zum Datenaustausch eingesetzt. Vorteilhaft dabei ist die Integration des Verfahrens in einem Kraftfahrzeug mit bekannten Hardware-Komponenten.

Gemäß einer weiteren bevorzugten Weiterbildung erfolgt der bereitgestellte Datenaustausch zwischen dem Fahrerinformationssystem und einem GPS-Detektor und/oder Navigationssystem. Auf diese Weise wird eine vorteilhafte Interaktion zwischen dem Fahrerinformationssystem und weiteren Datenquellen bzw. Datensenken ermöglicht.

Gemäß einer weiteren bevorzugten Weiterbildung weist der Xlet-basierte Datensatz im ersten Unterdatensatz einen BundleActivator-Dateneintrag und im zweiten Unterdatensatz ein Datenpaket mit einer Routine zum Implementieren einer Schnittstelle bei Aufruf des Eintrags auf. Dies ermöglicht im Ansatz, dass der Xlet-basierte Datensatz auch die Bundle-Spezifikation erfüllt und somit auch in OSGI-Systemen der Version bis einschließlich 2.0 verarbeitet werden kann.

Ausführungsbeispiele sind in den Zeichnungen dargestellt und werden in der nachfolgenden Beschreibung näher erläutert.

Es zeigen:
- Figur 1: ein schematisches Blockschaltbild zur Erläuterung einer Ausführungsform der vorliegenden Erfindung;
- Figur 2: eine schematische Darstellung eines Datensatzes zur Erläuterung einer Ausführungsform der vorliegenden Erfindung;
- Figur 3: ein schematisches Diagramm zur Erläuterung der Funktionsweise einer ersten Ausführungsform der vorliegenden Erfindung;
- Figur 4a, b: schematische Darstellungen zweier Datensätze zur Erläuterung einer zweiten Ausführungsform der vorliegenden Erfindung, wobei Figur 4a die für den Datenimport wesentlichen Einträge und Figur 4b die für den Datenexport insbesondere erforderlichen Einträge aufweist;
Figur 5a, b Schematische Diagramme zur Erläuterung einer Funktionsweise der zweiten Ausführungsform der vorliegenden Erfindung, wobei Figur 5a das Verfahren in einem OSGI-basierten System und Figur 5b das Verfahren in einem nicht-OSGI-basierten System darstellt;
Figur 6a, b Schematische Diagramme zur Erläuterung der Terminierung eines Datensatzes, wobei Figur 6a die Terminierung in einem OSGI-basierten System und Figur 6b die Terminierung in einem nicht-OSGI-basierten System darstellt.

In den Figuren bezeichnen gleiche Bezugszeichen gleiche oder funktionsgleiche Bestandteile.

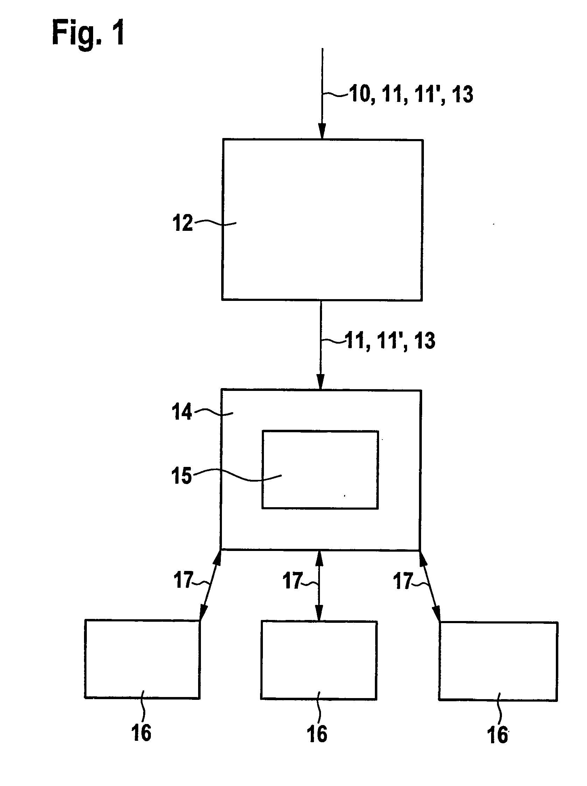

Die schematische Darstellung zur Erläuterung der Funktionsweise einer Ausführungsform der vorliegenden Erfindung gemäß dem Blockdiagramm in Figur 1 zeigt einen digitalen Datenstrom 10, in welchem sowohl passive Daten wie beispielsweise Audio- und/oder Videodaten aber auch aktive Datenblöcke 11, 11', wie einen Xlet-basierten Datensatz 11 "OSGI-Xlet", enthält. Der digitale Datenstrom 10 wird einer Empfangseinrichtung 12, wie beispielsweise einem DAB-Radioempfänger, zugeführt. Ist die Empfangseinrichtung 12 ein solcher DAB-Empfänger, so werden die Xlet-basierten Datensätze 11 im Datenstrom 10 in MOT (Multimedia Object Transfer protocol)-Rahmen 13 übertragen.

Der Datenstrom 10 kann sowohl kabelgebunden als auch beispielsweise über Radiowellen übertragen werden. In der Empfangseinrichtung 12 wird der Datenstrom 10 demoduliert und detektiert, welche Daten empfangen wurden, um eine weitere Verarbeitung der Daten des Datenstroms 10 vorzusehen. Aktive Daten, wie die Xlet-basierten Datensätze 11 OSGI-Xlet werden in einer Datenverarbeitungseinrichtung 14 mit darin enthaltener Speichereinrichtung 15 gemäß dem Verfahren der vorliegenden Erfindung weiter verarbeitet. Passive Daten wie Musik- bzw. Videodaten, Programmdaten usw. werden in der Empfangseinrichtung 12 verarbeitet und über ein Display oder einen Lautsprecher (nicht dargestellt) zur Anzeige gebracht. Der Verarbeitungseinrichtung 14 mit Speichereinrichtung 15 können von weiteren Datenquellen 16 wie beispielsweise einer Navigationseinrichtung, einem Speicher wie einer CD-ROM oder einem ortsbestimmenden GPS-Sensor Datensätze 17 zugeführt werden. Diese zugeführten Datensätze werden in der Datenverarbeitungseinrichtung 14 von Bundle-basierten Datensätzen 17 entgegengenommen.

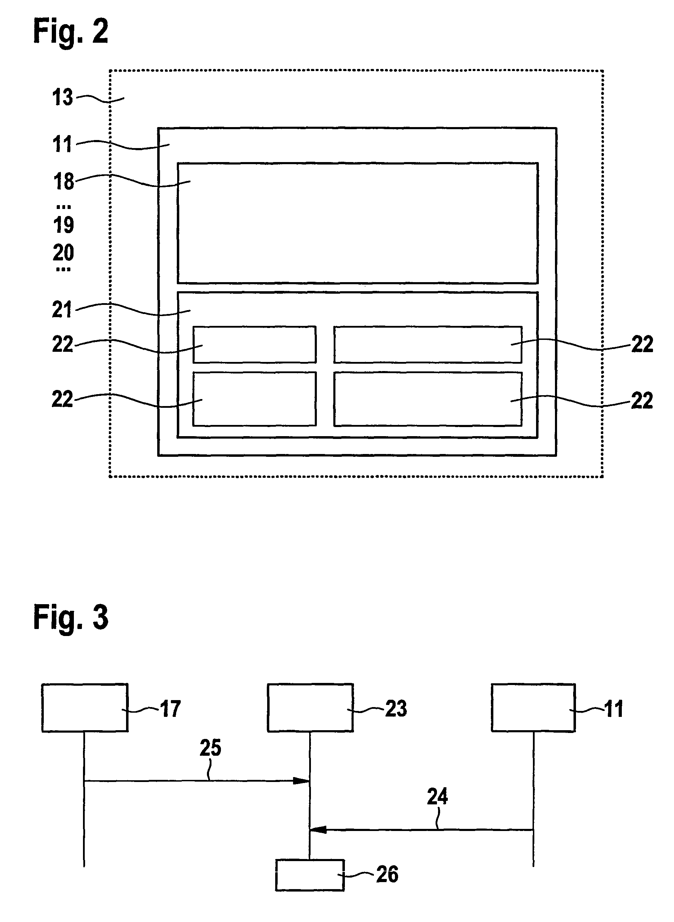

In Figur 2 ist ein schematisches Diagramm zur Erläuterung der Struktur eines Xlet-basierten Datensatzes dargestellt, welcher das erfindungsgemäße Verfahren gemäß einer ersten Ausführungsform der vorliegenden Erfindung ermöglicht. Der Xlet-basierte Datensatz 11 OSGI-Xlet ist, wenn er über DAB übertragen wurde, vorzugsweise in einem MOT-Rahmen 13 eingebettet, in welchem vorzugsweise vermerkt ist, dass der Xlet-basierte Datensatz 11 OSGI-Xlet aktive Daten enthält.

Der Xlet-basierte Datensatz 11 weist einen ersten Unterdatensatz 18 z.B. eine Manifestdatei auf, in welcher neben einer Hauptklassendefinition 19 beispielsweise Main-Class: einen Eintrag zur Definition eines Datenimport-Datentyps 20, z.B. Import-Package: xxx.yyy.zzz; Specification-Version=1.0, ppp.qqq; Specification-Version=1.3, aufweist. Darüber hinaus weist der Xlet-basierte Datensatz 11 einen zweiten Unterdatensatz 21 auf, welcher sich vorzugsweise aus Java-Code Datenpaketen 22 zusammensetzt.

In diesen Java-Code Datenpaketen 22 sind vorzugsweise die im Dateneintrag zur Definition des Datenimport-Datentyps also z.B. ein Paket xxx.yyy.zzz und ein Paket ppp.qqq enthalten. Außerdem ist beispielsweise ein Paket aaa mit einem Eintrag "Class MyXlet implements Xlet" neben anderen Datenpaketen vorgesehen. Der erste Unterdatensatz 18, z.B. eine Manifestdatei gemäß Xlet-Spezifikation, dient der Beschreibung des Datensatzes 11, wohingegen der zweite Unterdatensatz 21 konkret in einer Verarbeitungseinrichtung 14 abarbeitbare Anweisungen vorzugsweise in Java enthält.

Um ein Verfahren gemäß der vorliegenden Erfindung vorsehen zu können, ist es erforderlich, dass die Xlet-basierten Datensätze 11 einerseits die Xlet-Spezifikation spezifiziert in der DAB-Java-Spezifikation erfüllen, und darüber hinaus Einträge aufweisen, mit dem diese Xlet-basierten Datensätze 11 mitteilen können, welche Java-Klassen bzw. Datenpakete benötigt werden, um mit Datensätzen von einem anderen Typ wie beispielsweise Bundles gemäß der OSGI-Spezifikation kommunizieren zu können. Dies ist für alle Java-Klassen bzw. Datenpakete erforderlich, auf die sowohl der Xlet-basierte Datensatz 11 als auch ein anderer Datensatz 17 von einem anderen Datentyp z.B. ein Bundle zugreifen müssen.

Abgesehen davon ist es erforderlich, dass der Xlet-basierte Datensatz den Zugriff auf eine Implementierung einer Schnittstelle des zweiten Datensatztyps 17 bei einem Bundle beispielsweise die Schnittstelle BundleContext erhält. Eine solche Schnittstelle ist in der OSGI-Spezifikation definiert und ermöglicht den Zugriff auf in einem OSGI-System vorhandene Datensätze "Bundles" sowie das Anmelden eigener Funktionen, auf welche die zweiten Datensätze "Bundles" zugreifen können. Für OSGI-Versionen bis 2.0 müssen die Xlet-basierten Datensätze 11 OSGI-Xlets zusätzlich gleichzeitig die OSGI-Bundle-Spezifikation erfüllen.

Darüber hinaus ist es sinnvoll aber nicht notwendig, dass in der Beschreibung des Xlet-basierten Datensatzes 11 ein Eintrag hinzugefügt wird, der darauf hinweist, dass es sich um einen Xlet-basierten Datensatz 11 OSGI-Xlet handelt. Diese Beschreibung ist beispielsweise bei einem DAB-System in dem MOT-Rahmen 13 enthalten, in welchem auch der Xlet-basierte Datensatz 11 selbst eingebettet ist.

Der Eintrag zur Definition eines Datenimport-Datentyps 20 im ersten Unterdatensatz 18 des Xlet-basierten Datensatzes 11 hat beispielsweise das Format "Import-Package: <Package>, <Package2>,...", wobei <PackageN> ein Ausdruck ist, der aus einem Java-Paketnamen und einer Versionsangabe mit dem Format "Package. Subpackage. Subpackage; Specification-Version = 1.0" besteht. Es können beliebig viele Unterpakete (Subpackage) angegeben werden. Die Versionsnummer ist so zu verwenden, dass eine Version mit einer höheren Nummer jede Version mit einer niedrigeren Nummer ersetzen kann.

Dieses Format ist nur ein Ausführungsbeispiel. Es sind andere Formate für einen solchen Eintrag in dem ersten Unterdatensatz 18 Manifestdatei vorstellbar. Außerdem könnte man dieselbe Information in dem MOT-Rahmen 13 unterbringen in dem der Xlet-basierte Datensatz 11 enthalten ist. Überdies kann vorgesehen werden, dass der Xlet-basierte Datensatz 11 eine Schnittstelle implementiert, über welche man diese Information abfragen kann.

Entscheidend ist, dass das OSGI-System, welches in der Verarbeitungseinrichtung 14 ähnlich einem Betriebssystem installiert ist, die Informationen über die benötigten Datenpakete 22 erhält. Wenn der Xlet-basierte Datensatz 11 OSGI-Xlet bestimmte Klassen verwendet, die in einem der benötigten Datenpakete 22 enthalten sind, stellt das OSGI-System sicher, dass der Xlet-basierte Datensatz 11 OSGI-Xlet mit denselben Klassendefinitionen arbeitet, die auch im OSGI-System verwendet werden.

In Figur 3 ist ein schematisches Diagramm dargestellt, in welchem das Verfahren zwischen dem OSGI-System bzw. Datensätzen 17, welche der OSGI-Spezifikation genügen, wie beispielsweise Bundles, und einem Xlet-basierten Datensatz 11 OSGI-Xlet zur Erläuterung der Funktionsweise einer ersten Ausführungsform der vorliegenden Erfindung erläutert ist. Ein Xlet hat gemäß der DAB-Java-Spezifikation Zugriff auf eine Schnittstelle 23 "XletContext". Somit verfügt der Xlet-basierte Datensatz 11 OSGI-Xlet über die Möglichkeit eine Schnittstelle 23 XletContext aufzurufen. Diese Schnittstelle 23 XletContext enthält die Methode 24 "getX-letProperty (String)", die ein Objekt der Klasse "Object" zurückgibt, und somit einen Zugriff auf eine Referenz auf eine weitere Schnittstelle 26 z.B. BundleContext ermöglicht.

Der zweite vorzugsweise OSGI-System-basierte-Datensatz 17 enthält die Methode 25 "getXletProperty (String, ctx), welche eine Übergabe einer Referenz auf eine Schnittstelle 26 BundleContext eines Bundle-basierten Datensatzes an die Schnittstelle 23 XletContext ermöglicht, über welche der Xlet-basierte Datensatz 11 zunächst nur kommunizieren kann. Folglich wird die Schnittstelle 23 XletContext so verwendet, dass der Aufruf XletContext.getXletProperty (String) eine Implementierung der Schnittstelle 26 "BundleContext" zurückgibt, welche der OSGI-Spezifikation entspricht und damit den Datenaustausch zwischen dem Xlet-basierten Datensatz 11 und dem OSGI-basierten Datensatz 17 ermöglicht.

Folglich erhält somit der Xlet-basierte Datensatz 11 OSGI-Xlet den Zugriff auf das OSGI-System. Die Verwendung der Methode 24 "getXletProperty" ist wiederum nur ein Ausführungsbeispiel. Alternativ könnte man z.B. in der Schnittstelle 23 XletContext eine zusätzliche Methode definieren, die die Schnittstelle 26 BundleContext zurückgibt. Außerdem könnte man zur Erreichung dieses Zwecks eine neue Klasse definieren, die den Xlet basierten Datensatz 11 OSGI-Xlet verwendet. Entscheidend ist, dass der Xlet-basierte Datensatz 11 OSGI-Xlet Zugriff auf ein BundleContext-Objekt 26 erhält und somit ein Datenaustausch zwischen Datensätzen 17 "Bundles" im OSGI-System und dem Xlet-basierten Datensatz 11 "OSGI-Xlet" ermöglicht wird.

Der Xlet-basierte Datensatz 11 OSGI-Xlet fragt über die Xlet-systemimmanente Schnittstelle 23 XletContext ab, ob eine OSGI-Schnittstelle 26 BundleContext vorhanden ist, um diese zu übernehmen und für einen Datenlaustausch zu nutzen, falls von einem OSGI-basierten Datensatz 17 eine Referenz auf die Schnittstelle 26 BundleContext übergeben wurde. In einem System ohne OSGI-basierte Datensätze 17 liefert der Aufruf des Xlet-basierten Datensatzes 11 OSGI-Xlet als Ergebnis Null. Daran erkennt der Xlet-basierte Datensatz 11 OSGI-Xlet, dass ein Zugriff auf einen OSGI-System-basierten Datensatz 17 für einen Datenaustausch nicht möglich ist.

Der Xlet-basierte Datensatz 11 OSGI-Xlet ist dann trotzdem lauffähig, kann allerdings nicht mit OSGI-System-basierten Java-Applikationen 17 "Bundles" kommunizieren, da zur Kommunikation bzw. zum Datenaustausch zwischen diesen zwei Datensatztypen die Implementierung einer gemeinsamen Schnittstelle BundleContext nicht durchgeführt werden kann.

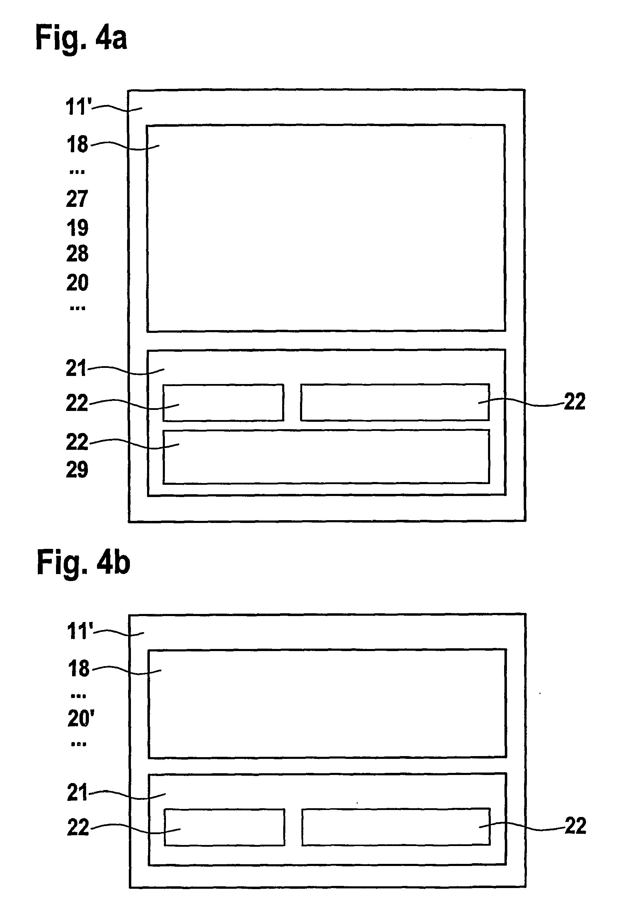

In Figur 4a, b ist ein Xlet-basierter Datensatz 11 in einem Diagramm gemäß Figur 2 dargestellt, welcher derart erweitert ist, dass er auch die Spezifikation einer Java-Applikation im OSGI-System "Bundle" für OSGI-Versionen bis 2.0 erfüllt. Figur 4a zeigt einen Datenimport- und Figur 4b einen Datenexport Xlet-basierten Datensatz 11' "Xlet-Bundle". Der nachfolgend erläuterte erweiterte Xlet-basierte Datensatz 11' "Xlet-Bundle" weist zusätzliche Einträge auf, um als selbständige Java-Applikation im OSGI-System lauffähig zu sein, gleichzeitig aber dennoch die Xlet-Spezifikation zu erfüllen und somit ebenfalls auf einem Empfänger ohne OSGI-System lauffähig ist.

Dazu weist der erste Unterdatensatz 18 "Manifestdatei" zusätzlich zu dem mit Bezug auf Figur 2 erläuterten Xlet-basierten Datensatz 11 "OSGI-Xlet" einen Eintrag 27 "Class-Path: app2.jar" auf. Wenn ein erweiterter Xlet-basierter Datensatz 11 Xlet-Bundle den in der DAB-Java-Spezifikation vorgesehenen Eintrag "class-path" verwendet, um auf andere Xlets zuzugreifen, dann muss der erweiterte Xlet-basierte Datensatz 11 Xlet-Bundle in seinem ersten Unterdatensatz 18 "Manifestdatei" "Import-package"-Einträge wie sie im vorangehenden erläutert sind, für alle Datenpakete enthalten, die von anderen Xlets benötigt werden. Alle anderen Xlets, die solche benötigten Datenpakete enthalten, müssen für die benötigten Datenpakete Einträge in deren Unterdatensatz 18 "Manifestdatei" mit dem Format "Export-Package: <packagel>, <package2>, ..." gemäß Figur 4b enthalten, welchen den oben genannten "Import-package"-Einträgen entsprechen.

Außerdem, ist es erforderlich, dass ein solcher erweiteter Xlet-basierter Datensatz 11 "Xlet-Bundle" in seinem ersten Unterdatensatz 18 "Manifestdatei" einen Eintrag mit dem Format "BundleActivator: <class>" aufweist und den Namen einer Klasse definiert, die in dem erweiterten Xlet-basierten Datensatz 11 "Xlet-Bundle" enthalten ist und die in der OSGI-Spezifikation definierte Schnittstelle "BundleActivator" implementiert. Ein solcher Eintrag 28 lautet beispielsweise "BundleActivator: aaa.MyActvator". In einem Datenpaket 22 des zweiten Unterdatensatzes 21, beispielsweise ein Packet aaa, ist dann entsprechend eine Routine 29 vorhanden welche auf den Aufruf der Klasse "MyActivator" die in der OSGI-Spezifikation definierte Schnittstelle "BundleActivator" implementiert.

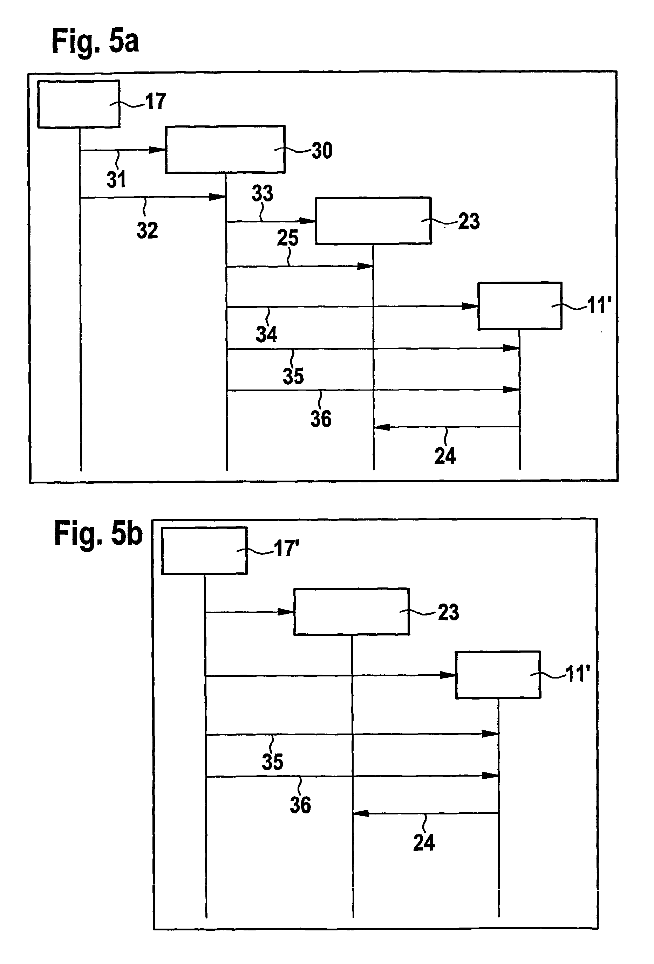

In Figur 5a,b ist ein Ablaufdiagramm gemäß Figur 3 zur Erläuterung der Funktionsweise einer zweiten Ausführungsform der vorliegenden Erfindung dargestellt, wobei Figur 5a die Ermöglichung eines Datenaustausches in einem OSGI-basierten System und Figur 5b in einem nicht OSGI-basierten System zeigt. In Figur 5a wird zunächst eine Schnittstelle 30 "Bundle-Activator" aktiviert 31. Daraufhin folgt der Funktionsaufruf 32 zum Starten der Schnittstelle BundleContext z.B. "start (BundleContext ctx)" durch einen OSGI-basierten Datensatz 17 woraufhin von der Schnittstelle 30 BundleActivator die Schnittstelle XletContext 23 angelegt wird 33. Daraufhin ergeht von der Schnittstelle 30 "BundleActivator" der mit Bezug auf Figur 3 erläuterte Aufruf 25 zum Beispiel "setXletProperty (String ctx)". Daran schließt sich ein Hochfahren 34 des erweiterten Xlet-basierten Datensatzes 11' "Xlet-Bundle" an. Nach der Initialisierung 35 beispielsweise "initXlet (XletContext xc)" folgt schließlich der Start 36 z.B. "startXlet ()" des erweiterten Xlet-basierten Datensatzes 11' "Xlet-Bundle".

Schließlich greift der erweiterte Xlet-basierte Datensatz 11' "Xlet-Bundle" auf die Referenz auf die Schnittstelle 26 BundleContext von der Schnittstelle 23 XletContext aus zu, wodurch ein Datenaustausch zwischen einem OSGI-basierten Datensatz "Bundle" und dem erweiterten Xlet-basierten Datensatz 11' "Xlet-Bundle" ermöglicht wird.

In einem gemäß Figur 5b dargestellten nicht OSGI-basierten System ist die OSGI-Schnittstelle 30 "BundleActivator" nicht vorhanden. Folglich kann auch keine Referenz auf die Bundle-Schnittstelle "BundleContext" an die Schnittstelle 23 "XletContext" erfolgen, so dass der Aufruf 24 zum Zugreifen auf die OSGI-Schnittstelle "BundleContext" ins Leere läuft. Ein solches System gemäß Figur 4b ist beispielsweise ein DAB-Empfänger 12, welcher einen erweiterten Xlet-basierten Datensatz 11, 11' "OSGI-Xlet" oder "Xlet-Bundle" emfängt, in dessen Datenverarbeitungseinrichtung 14 jedoch kein OSGI-System bzw. kein OSGI-basierter Datensatz 17 vorgesehen ist. Ein Datenaustausch zwischen einem solchen System und dem Xlet-basierten Datensatz 11, 11' ist dann nicht möglich.

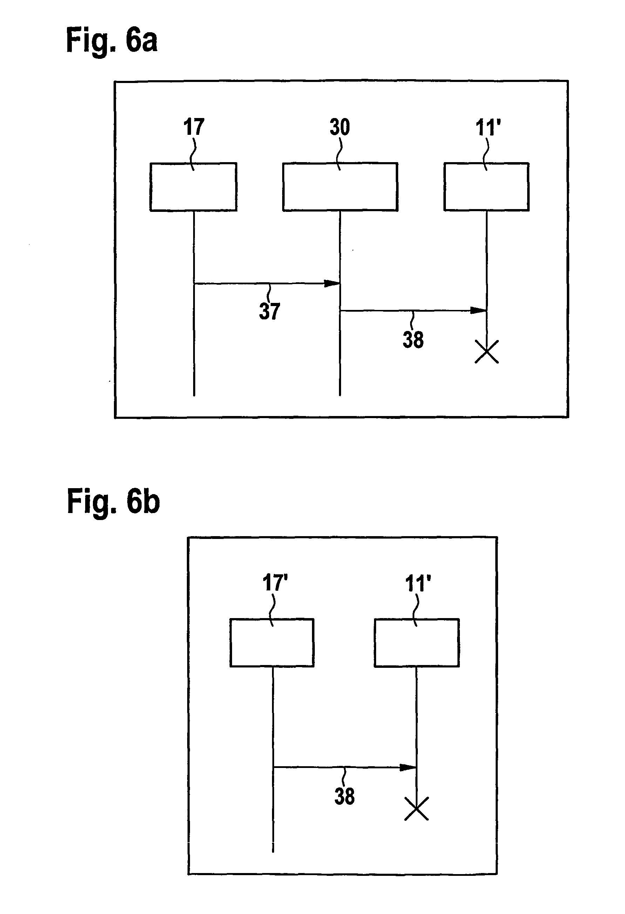

In Figur 6a, b ist das Beenden eines Xlet-Bundles 11 dargestellt, wobei Figur 6a den Vorgang in einem OSGI-basierten System und Figur 6b in einem nicht OSGI-basierten System darstellt. Gemäß Figur 6a folgt zum Beenden der Funktion eines erweiterten Xlet-basierten Datensatzes 11' "Xlet-Bundle eine Methode 37 "stop()" aufgrund derer die Schnittstelle 30 "BundleActivator" gemäß Figur 6a eine Methode 38 "destroyXlet()" des erweiterten Xlet-basierten Datensatzes 11' aufruft. Daraufhin wird der erweiterte Xlet-basierte Datensatz 11' terminiert. Figur 6b beschreibt den vergleichbaren Sachverhalt gemäß Figur 6a jedoch in einem nicht OSGI-basierten System, demzufolge eine Methode 38 zum Beenden des Xlet-Bundles 11' direkt erfolgt.

Obwohl die vorliegende Erfindung vorstehend anhand bevorzugter Ausführungsbeispiele beschrieben wurde, ist sie darauf nicht beschränkt, sondern auf vielfältige Weise modifizierbar.

So kann das erfindungsgemäße Verfahren zum Ermöglichen eines Austausches von Daten zwischen einem OSGI-basierten Datensatz und einem Xlet-basierten Datensatz auch in der Gebäudeüberwachung bzw. -steuerung eingesetzt werden. Außerdem müssen die Xlet-basierten Datensätze nicht zwangsläufig über Radiowellen übertragen werden, sondern können der Datenverarbeitungseinrichtung bzw. der Empfangseinrichtung auch über elektrische und/oder optische Leitungen zugeführt werden. Schließlich sind die erwähnten Befehle bzw. Aufrufe und Adressformate beispielhaft zu sehen.

## Patentansprüche

1. Verfahren zum Ermöglichen eines Austausches von Daten zwischen einem Xlet-basierten Datensatz (11, 11') und einem Bundle-basierten Datensatz (17) über eine Bundle-basierte Schnittstelle (26) mit den Schritten:
Bereitstellen mindestens des Xlet-basierten Datensatzes (11, 11') in einer Datenverarbeitungseinrichtung (14) mit einer Speichereinrichtung (15), wobei der Xlet-basierte Datensatz (11, 11') über eine Xlet-basierte Schnittstelle (23) Daten austauschen kann;
Bereitstellen des Bundle-basierten Datensatzes (17) in der Datenverarbeitungseinrichtung (14), wobei der Bundle-basierte Datensatz (17) über eine Bundle-basierte Schnittstelle (26) Daten austauschen kann;
Feststellen, ob die Datenverarbeitungseinrichtung (14) die Bundle-basierte Schnittstelle (26) aufweist, über die Xlet-basierte Schnittstelle (23), und falls ja,
Speichern einer Referenz auf eine Bundle-basierte Schnittstelle (26) im Xlet-basierten Datensatz (11, 11'), um einen Zugriff auf Bundle-basierte Datensätze (17) und somit einen Datenaustausch in der Datenverarbeitungseinrichtung (14) zu ermöglichen.

2. Verfahren nach Anspruch 1,
**dadurch gekennzeichnet,**
**daß** der Bundle-basierte Datensatz (17) der Xlet-basierten Schnittstelle (23) eine Referenz (25) auf die Bundle-basierte Schnittstelle (26) übergibt und der Xlet-basierte Datensatz (11, 11') auf die Referenz (24) auf die Bundle-basierte Schnittstelle (26) zugreift, um über diese Bundle-basierte Schnittstelle (26) einen Datenaustausch vorzusehen.

3. Verfahren nach Anspruch 1 oder 2,
**dadurch gekennzeichnet,**
**daß** der Xlet-basierte Datensatz (11, 11') einen ersten Unterdatensatz (18) zum Definieren der Eigenschaften und des Inhalts des Xlet-basierten Datensatzes (11, 11') und einen zweiten Unterdatensatz (21) mit Datenpaketen (22) aufweist, wobei der erste Unterdatensatz (18) mindestens einen Dateneintrag eines Datenimport-Typs (20) aufweist, in welchem definiert wird, welche Java-Pakete (22) für die Bereitstellung des Datenaustausches erforderlich sind.

4. Verfahren nach Anspruch 1 oder 2,
**dadurch gekennzeichnet,**
**daß** mindestens ein Dateneintrag (20), in welchen definiert wird, welche Java-Pakete (22) für die Bereitstellung des Datenaustausches erforderlich sind, über einen MOT-Rahmen (13) bereitgestellt wird, wobei der Xlet-basierte Datensatz (11, 11') einen Abschnitt im MOT-Rahmen (13) bildet.

5. Verfahren nach einem der vorangehenden Ansprüche,
**dadurch gekennzeichnet,**
**daß** der Xlet-basierte Datensatz (11, 11') in einem Datenstrom (10) mit mindestens einem Xlet-basierten Datensatz (11, 11') über eine Rundfunkempfangseinrichtung (12) empfangen und demoduliert wird.

6. Verfahren nach Anspruch 5,
**dadurch gekennzeichnet,**
**daß** der Xlet-basierte Datensatz (11, 11') über eine DAB-Empfangseinrichtung empfangen und demoduliert wird.

7. Verfahren nach Anspruch 6,
**dadurch gekennzeichnet,**
**daß** der Xlet-basierte Datensatz (11, 11') als Teil eines MOT-Datensatzes (13) übertragen wird, wobei der MOT-Datensatz (13) einen Eintrag aufweist, welcher auf eine OSGI-Kompatibilität hinweist.

8. Verfahren nach einem der vorangehenden Ansprüche,
**dadurch gekennzeichnet,**
**daß** der Xlet-basierte Datensatz (11, 11') einer Datenverarbeitungseinrichtung (14) eines Fahrerinformationssystems in einem Kraftfahrzeug zugeführt und dort zum Datenaustausch eingesetzt wird.

9. Verfahren nach Anspruch 8,
**dadurch gekennzeichnet,**
**daß** der bereitgestellte Datenaustausch zwischen dem Fahrerinformationssystem und einem GPS- und/oder Navigationssystem erfolgt.

10. Verfahren nach Anspruch 3,
**dadurch gekennzeichnet,**
**daß** der Xlet-basierte Datensatz (11, 11') im ersten Unterdatensatz (18) einen BundleActivator-Dateneintrag und im zweiten Unterdatensatz (21) ein Java-Paket (22) mit einer Routine zum Implementieren einer Schnittstelle (30) bei Aufruf des Eintrags aufweist.

## Claims

1. Method for permitting an exchange of data between an Xlet-based dataset (11, 11') and a bundle-based dataset (17) via a bundle-based interface (26), involving the following steps:
providing at least one Xlet-based dataset (11, 11') in a data processing device (14) comprising a memory device (15), whereby the Xlet-based dataset (11, 11') can exchange data via an Xlet-based interface (23);
providing the bundle-based dataset (17) in the data processing device (14), whereby the bundle-based dataset (17) can exchange data via a bundle-based interface (26) ;
establishing whether the data processing device (14) has the bundle-based interface (26), via the Xlet-based interface (23), and if this is the case,
storing a reference to a bundle-based interface (26) in the Xlet-based dataset (11, 11') in order to permit access to bundle-based datasets (17) and thus an exchange of data in the data processing device (14).

2. Method according to Claim 1,
**characterized**
**in that** the bundle-based dataset (17) transfers to t Xlet-based interface (23) a reference (25) to t bundle-based interface (26) and the Xlet-based dataset (11, 11') accesses the reference (24) to the bundle-based interface (26) in order to provide an exchange of data over said bundle-based interface (26).

3. Method according to Claim 1 or 2,
**characterized**
**in that** the Xlet-based dataset (11, 11') has a first sub-dataset (18) for defining the properties and the contents of the Xlet-based dataset (11, 11') and a second sub-dataset (21) with data packets (22), the first sub-dataset (18) having at least one data entry of a data import type (20) in which it is defined which Java packages (22) are required for providing the data exchange.

4. Method according to Claim 1 or 2,
**characterized**
**in that** at least one data entry (20) in which it is defined which Java packages (22) are required for providing the data exchange is provided via an MOT frame (13), wherein the Xlet-based dataset (11, 11') forms one section in the MOT frame (13).

5. Method according to one of the preceding claims,
**characterized**
**in that** the Xlet-based dataset (11, 11') is received and demodulated in a data stream (10) having at least one Xlet-based dataset (11, 11') by a radio receiving device (12).

6. Method according to Claim 5,
**characterized**
**in that** the Xlet-based dataset (11, 11') is received and demodulated by a DAB receiving device.

7. Method according to Claim 6,
**characterized**
**in that** the Xlet-based dataset (11, 11') is transmitted as part of an MOT dataset (13), wherein the MOT dataset (13) has an entry that indicates OSGI compatibility.

8. Method according to one of the preceding claims,
**characterized**
**in that** the Xlet-based dataset (11, 11') is supplied to a data processing device (14) of a driver information system in a motor vehicle and is used there for data exchange.

9. Method according to Claim 8,
**characterized**
**in that** the data exchange provided takes place between the driver information system and a GPS and/or navigation system.

10. Method according to Claim 3,
**characterized**
**in that** the Xlet-based dataset (11, 11') has a BundleActivator data entry in the first sub-dataset (18), and a Java package (22) in the second sub-dataset (21) with a routine for implementing an interface (30) when the entry is called.

## Revendications

1. Procédé pour permettre un échange de données entre un jeu de données à base de Xlets (11, 11') et un jeu de données à base de faisceau (17) par l'intermédiaire d'une interface à base de faisceau (26) comportant les étapes suivantes :
- on prépare au moins un jeu de données à base de Xlets (11, 11') dans une installation de traitement de données (14) comportant une installation de mémoire (15), le jeu de données à base de Xlets (11, 11') pouvant échanger des données par l'intermédiaire d'une interface à base de Xlets (23) ;
- on prépare le jeu de données à base de faisceau (17) dans l'installation de traitement de données (14), le jeu de données à base de faisceau (17) pouvant échanger des données par l'intermédiaire d'une interface à base de faisceau (26) ;
- on détermine si l'installation de traitement de données (14) présente l'interface à base de faisceau (26) par l'intermédiaire de l'interface à base de Xlets (23) et si oui,
- on enregistre une référence sur une interface à base de faisceau (26) dans le jeu de données à base de Xlets (11, 11') pour permettre un accès à des jeux de données à base de faisceau (17) et ainsi un échange de données dans l'installation de traitement de données (14).

2. Procédé selon la revendication 1,
**caractérisé en ce que**
le jeu de données à base de faisceau (17) transmet à l'interface à base de Xlets (23) une référence (25) sur l'interface à base de faisceau (26) et le jeu de données à base de Xlets (11, 11') accède à la référence (24) sur l'interface à base de faisceau (26), afin de prévoir un échange de données par l'intermédiaire de cette interface à base de faisceau (26).

3. Procédé selon la revendication 1 ou 2,
**caractérisé en ce que**
le jeu de données à base de Xlets (11, 11') présente un premier jeu partiel de données (18) permettant la définition des propriétés et du contenu du jeu de données à base de Xlets (11, 11') et un deuxième jeu de données partiel (21) comportant des paquets de données (22), le premier jeu de données partiel (18) présentant au moins un enregistrement de données de type importation de données (20) dans lequel on définit quels paquets Java (22) sont nécessaires pour la préparation de l'échange de données.

4. Procédé selon la revendication 1 ou 2,
**caractérisé en ce qu'**
au moins un enregistrement de données (20), dans lequel on définit quels paquets Java (22) sont nécessaires à la préparation de l'échange de données, est préparé par l'intermédiaire d'un cadre MOT (13), le jeu de données à base de Xlets (11, 11') formant un segment dans le cadre MOT (13).

5. Procédé selon l'une quelconque des revendications précédentes,
**caractérisé en ce que**
le jeu de données à base de Xlets (11, 11') est reçu et démodulé dans un flux de données (10) comportant au moins un jeu de données à base de Xlets (11, 11') par l'intermédiaire d'une installation de réception radio (12).

6. Procédé selon la revendication 5,
**caractérisé en ce que**
le jeu de données à base de Xlets (11, 11') est reçu et démodulé par l'intermédiaire d'une installation de réception DAB.

7. Procédé selon la revendication 6,
**caractérisé en ce que**
le jeu de données à base de Xlets (11, 11') est transmis en tant que partie d'un jeu de données MOT (13), le jeu de données MOT (13) présentant un enregistrement qui indique une compatibilité OSGI.

8. Procédé selon l'une quelconque des revendications précédentes,
**caractérisé en ce que**
le jeu de données à base de Xlets (11, 11') est acheminé vers une installation de traitement de données (14) d'un système d'information du conducteur dans un véhicule automobile et y est utilisé pour l'échange de données.

9. Procédé selon la revendication 8,
**caractérisé en ce que**
l'échange de données préparé s'effectue entre le système d'information du conducteur et un système GPS et/ ou de navigation.

10. Procédé selon la revendication 3,
**caractérisé en ce que**
le jeu de données à base de Xlets (11, 11') présente, dans le premier jeu de données partiel (18) un enregistrement de données BundleActivator et, dans le deuxième jeu de données partiel (21) un paquet Java (22) comportant une routine pour l'implémentation d'une interface (30) lors de l'ouverture de l'enregistrement
